# EUROPEAN PATENT APPLICATION

(11) **EP 4 570 672 A1**
(43) Date of publication of application: **18.06.2025**
(21) Application number: 23216098.6
(22) Date of filing: 13.12.2023
(51) Int. Cl.: B64U 50/34, B64U 50/35

(54) **DEVICE FOR PROVIDING ELECTRICAL ENERGY TO A VERTICAL TAKE-OFF OR LANDING AIRCRAFT AND METHOD THEREFOR**

(71) Applicant: Customcells Holding GmbH, 25524 Itzehoe (DE)
(72) Inventor: Moldoveanu, Ioana, Itzehoe (DE); Diekmann, Jan, Itzehoe (DE)
(74) Representative: LKGLOBAL Lorenz & Kopf Patentanwalt Attorney at Law PartG mbB

(57) **Abstract**

A first aspect of this disclosure is related to a device for providing electrical energy to an aircraft (130) for vertical take-off or landing (VTOL)
comprising:
- a first interface (112) configured to be connected to an electrical energy source (120);
- a provision means (110) attached to the first interface and for providing electrical energy upwards and/or sidewards to the VTOL aircraft while the VTOL is airborne,
- a second interface (114) configured to be connected to the provision means and to a VTOL aircraft and configured for providing electrical energy from the energy source over the provision means to the VTOL aircraft .

## Description

### Technical Field

This disclosure is related to devices for charging VTOL aircrafts, in particular electrically powered VTOL aircrafts. Additionally, methods for charging VTOL aircrafts are disclosed.

### Background

VTOL stands for Vertical Take-off and Landing. It refers to the ability of an aircraft or vehicle to take off, hover and land vertically without the need for a runway or a long open area for a conventional take-off or landing. VTOL aircrafts are, e.g., helicopters or drones.

A large part of the stored energy in electrically powered VTOL aircraft is reserved for take-off and landing. In these phases, a VTOL aircraft cannot benefit from the lift of the wings but must rely solely on the lift generated by the engines. As a result, a significant part of a VTOL aircraft's energy is consumed during the take-off and landing phases. Improvements are desirable here.

### Summary

An object of embodiments of the present disclosure is an improvement of power efficiency of a VTOL aircraft.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of this disclosure is related to a device for providing electrical energy to an aircraft for vertical take-off or landing (VTOL) comprising:
- a first interface configured to be connected to an electrical energy source ;
- a provision means attached to the first interface and for providing electrical energy upwards and/or sidewards to the VTOL aircraft while the VTOL is airborne,
- a second interface configured to be connected to the provision means and to a VTOL aircraft and configured for providing electrical energy from the energy source over the provision means to the VTOL aircraft .

A vertical-take-of-and-landing (VTOL) aircraft can be a helicopter, a tiltrotor aircraft, or a multi-copter. A multicopter can be, e.g., a quadcopter (which has four rotors), a hexacopter, or an opticopter. A VTOL normally has one or more electrical systems that need electrical energy. This electrical energy can be provided by a battery, in particular when the VTOL aircraft is not coupled to an external electrical energy source. A VTOL aircraft can also be an electric-driven VTOL (eVTOL) aircraft. This is an electrically powered aircraft capable of taking off and landing vertically. A VTOL aircraft or an eVTOL aircraft is configured to hover over ground, that means the vehicle essentially keeps a pre-defined position in an air space. A VTOL aircraft can be used for various purposes, including urban air mobility, cargo transportation, air taxis.

Devices according to the first aspect are configured to serve VTOL aircrafts that are airborne. An airborne VTOL aircraft can be in vertical and/or horizontal flight, or in hovering flight.

VTOL or eVTOL aircraft can have various electrical systems, depending on their design, purpose, and technology. The electrical energy provided by the provision means can be used for the propulsion system. The propulsion system can comprise one or more electric motors of an eVTOL aircraft. These motors are configured to drive rotor blades, propellers, or fans needed for VTOL aircrafts as well as horizontal flight and hovering. The electrical energy can also be used for an energy storage system, such as a battery. eVTOL aircrafts typically rely on batteries or energy storage systems (such as Li-batteries) to provide the electrical energy needed for propulsion. The electrical energy provided by the provision means can be used for a flight control system. A flight-control system can comprise a fly-by-wire system. Many eVTOL aircrafts use fly-by-wire technology, which replaces traditional mechanical control systems with an electronic control system to compute the flight controls parameters and/or electric servo systems to adjust the flight controls (flaps, ailerons, speed brakes, etc.) based on the computed parameters. VTOL or eVTOL aircraft can be equipped with various sensors, including accelerometers, gyroscopes, GPS, magnetometers, and altimeters, to monitor the aircraft's position, attitude, and motion. These sensors can be configured to use electrical energy provided by a provision means according to the first aspect of this disclosure. Additionally or alternatively, the electrical energy provided by the provision means can be used for avionics and navigation systems. These can comprise GPS, inertial navigation, and possibly visual or lidar-based systems for precise positioning and navigation. Communication systems can include radios, transponders, and communication links for air traffic control and communication with ground stations. Cockpit displays provide flight information to the pilot. The electrical energy provided by the provision means can further be used for safety systems, lighting systems, and/or visibility systems.

A first interface for an electrical connection of a provision means to an energy source is configured to serve as the point of contact to provide electrical energy to the provision means. The first interface can be a plug that is configured to be connected to a socket on the side of the energy source. Depending on the socket type at the energy source, a plug a female or a male plug. A first interface can be configured such that it is detachable if a force exerted on the plug increases a pre-defined threshold. In this way, the connection between a VTOL aircraft and an energy source can safely be released if the VTOL aircraft cannot hold its position, e.g. if the VTOL aircraft drifts away from the energy source. Such a connection can e.g. be realized by a magnetic connection between the plug and a socket. In another example, such a connection can be realized by a frictional connection between the first interface and the energy source. Alternatively or additionally, the interface can comprise an extension cable. By the extension cable, a certain drifting by a VTOL aircraft attached to the energy source can be compensated until it must be released to prevent a crash of the attached VTOL aircraft.

A provision means can in particular be configured to bridge a distance between an energy source and an airborne VTOL aircraft. A provision means can therefore comprise a stiff and/or flexible means that comprises an electrical conductor in order to provide electrical energy from the energy source to the airborne VTOL aircraft. Different provision means and features for provision means are described in the following.

An electrical energy source can be configured to provide electrical energy from a grid, i.e. an electrical network connected to a power plant. Additionally or alternatively, an electrical energy source can be configured to transform energy of non-electrical energy form to electrical energy before providing the electrical energy to the VTOL aircraft.

A second interface can be configured in the same way as the first interface, only that it establishes a connection between a provision means and a VTOL. Therefore, the second connection can also comprise a socket or a plug depending on the counterpart of the interface at the VTOL. The second interface can be in particular configured to be detachable in case a force between the second interface and its counterpart at the VTOL exceeds a pre-defined force. A second interface can also be configured for automatic connection with the VTOL aircraft.

An embodiment of the first aspect of this disclosure is related to a device for providing electrical energy to an aircraft for vertical take-off or landing, VTOL, wherein the VTOL aircraft comprises an electrical compulsion technology.

An electrical compulsion technology can be one or more electric motors to drive the rotors or propellers that provide vertical lift and forward thrust. Lithium-ion batteries are commonly used due to their energy density and reliability. Some VTOL aircrafts may also incorporate fuel cells or hybrid propulsion systems for extended range. An energy management system is responsible for managing the distribution of electrical power to various components of the VTOL aircraft. It ensures that power is supplied to the motors, avionics, lighting, and other systems as needed, while also monitoring battery health and safety.

An embodiment of the first aspect of this disclosure is related to a device for providing electrical energy to an aircraft for vertical take-off or landing, VTOL, wherein the device comprises the electrical energy source, in particular an electrical battery.

In this case, a first interface might be realized as a non-detachable connection between a provision means and an energy source.

An embodiment of the first aspect of this disclosure is related to a device for providing electrical energy to an aircraft for vertical take-off or landing, VTOL, wherein the electrical energy source comprises a fuel-based electrical generator.

In this case, a first interface might also be realized as a non-detachable connection between a provision means and an energy source.

An embodiment of the first aspect of this disclosure is related to a device for providing electrical energy to an aircraft for vertical take-off or landing, VTOL, wherein the provision means can comprise a flexible part and/or a stiff part.

In order to bridge a distance between an airborne VTOL aircraft and an energy source at least one flexible part of the provision means may be used and/or at least one stiff part may be used. In particular for providing electrical energy vertically to an airborne VTOL aircraft (this includes a vertical component of a path from an energy source to an airborne VTOL aircraft) a flexible means can be used, e.g., a cable, a tube, etc. In particular for providing electrical energy horizontally to an airborne VTOL aircraft (this includes a horizontal component of a path from an energy source to an airborne VTOL aircraft) a stiff means can be used, e.g., be a ladder, a cane, a bar, a cantilever, a rod, etc.

An embodiment of the first aspect of this disclosure is related to a device for providing electrical energy to an aircraft for vertical take-off or landing, VTOL, wherein the provision means can comprise one or more of:
- a cable;
- a cantilever;
- a rod;
- a ladder.

A provision means can comprise a plurality of stiff and/or flexible means.

An embodiment of the first aspect of this disclosure is related to a device for providing electrical energy to an aircraft for vertical take-off or landing, VTOL, wherein the provision means has a controllable length and/or height.

A controllable length can be implemented by an actuated cantilever and/or an articulated arm system. A provision means configured for controllable length and/or height can have the advantage that electrical energy can be provided to an airborne VTOL aircraft without the necessity that the aircraft has to fly or hover at an exact pre-defined location. By adjusting length and/or height of the provision means, volatilities in the position of the VTOL aircraft can be compensated. This is can particular possible during an energy provision. By using one or more sensors that automatically measure the position of an airborne VTOL aircraft, a vertically and/or laterally controllable provision means can be controlled such that sudden position deviations, e.g. caused by a gust of wind, can be compensated such that a provision of electrical energy needs not to be stopped.

An embodiment of the first aspect of this disclosure is related to a device for providing electrical energy to an aircraft for vertical take-off or landing, VTOL, wherein the provision means and/or the second interface comprise a parachute system.

A parachute system is a means configured to slow down a descent of a provision means by creating drag and aerodynamic resistance. A parachute can be used if a provision of electrical energy to an airborne VTOL aircraft is finished, had to be stopped, or failed. Slowing down a descent of a provision means prevents the second interface and/or the provision means from being damaged by too hard an impact on the ground. A parachute system can comprise one or more parachutes. A parachute system can be attached to the provision means and/or to the second interface, which is attached to the provision means. A parachute system can be configured to open only if the provision means and/or the second interface has a distance to an airborne VTOL aircraft that exceeds a threshold distance. This prevents the parachute system from getting entangled with the VTOL aircraft and causing damage to it.

An embodiment of the first aspect of this disclosure is related to a device for providing electrical energy to an aircraft for vertical take-off or landing, VTOL, wherein the provision means is configured to fly to the VTOL aircraft automatically.

A provision means might be attached (at least indirectly via a second interface) to an aircraft, e.g. a drone. Thereby, a device according to the first aspect can provide electrical energy to an airborne VTOL aircraft during a lateral flight of the aircraft. That means, the aircraft does not need to hover for provision of electrical energy and can thereby profit from lift caused by non-actuated airfoils instead of propellers, etc.

An embodiment of the first aspect of this disclosure is related to a device for providing electrical energy to an aircraft for vertical take-off or landing, VTOL, wherein the provision means is configured to actively fly away from the VTOL aircraft.

This can also be implemented by a drone attached to the provision means. In this case, a drone may be configured to lift a provision means and a second interface attached to it in order to reach a hovering VTOL aircraft. Additionally or alternatively, a drone may be configured to slow down a descent after an energy provision has/was stopped. A drone can be configured for automatically flying to an airborne VTOL aircraft and/or for flying according to a user input.

An embodiment of the first aspect of this disclosure is related to a device for providing electrical energy to an aircraft for vertical take-off or landing, VTOL, configured to provide electrical energy while the VTOL aircraft flies laterally.

This can in particular be implemented by a drone that comprises a source of electrical energy. Of course, such a drone can also be used for providing electrical energy to a hovering VTOL aircraft. The drone can then be configured to be recharged on the ground.

An embodiment of the first aspect of this disclosure is related to a device for providing electrical energy to an aircraft for vertical take-off or landing, VTOL, wherein the first interface, the provision means, and/or the second interface are configured for contactless transmission of electrical energy.

Electrical energy can be provided without direct physical contact by inductive and/or capacitive coupling, e.g. through an electrical transformer. This may require close contact of the two components between which electrical energy can be exchanged. Additionally or alternatively, electrical energy can be provided via microwaves, so called microwave power transmission. This can be used for providing electrical energy over an air gap. For example, the airborne vehicle needs to fly at an approximate position and a device according to the first aspect then provided electrical energy via microwaves, bridging an air gap of smaller than 0.5m, 1m, 2m, 3m, 5m, 10m, 15m. Therefore, a VTOL aircraft needs to be equipped with a receiver configured to receive electrical energy via microwaves. In particular a provision means can comprise a function of a microwave-based provision of electrical energy and an automatic VTOL aircraft position deviation compensation (as described above). In this case instead of moving a whole cantilever or articulated arm, only the microwave energy sender needs to be directed to the position of the VTOL aircraft (i.e. the counter part of the second interface at the VTOL aircraft). This enables fast compensation of position deviations of a VTOL aircraft without interrupting an energy provision.

An embodiment of the first aspect of this disclosure is related to a device for providing electrical energy to an aircraft for vertical take-off or landing, VTOL, wherein the second interface is configured to be disconnected from the VTOL aircraft and/or the provision means based on a force exerted by the VTOL aircraft on the second interface.

The second interface can be in particular configured to be detachable in case a force between the second interface and its counterpart at the VTOL aircraft exceeds a pre-defined force. Thereby, the aircraft status (hovering, laterally flying) is protected. A detachable connection can in particular be realized by a magnetic connection, a frictional connection, and/or by incorporate a target breaking point in the second interface and/or the counterpart at the VTOL aircraft.

An embodiment of the first aspect of this disclosure is related to a device for providing electrical energy to an aircraft for vertical take-off or landing, VTOL, configured to transform wind and/or solar energy to electrical energy for provision to the VTOL aircraft.

This can in particular be helpful if an airborne VTOL aircraft shall be provided with electrical energy without an electrical grid being available, e.g. at remote places.

A second aspect of this disclosure is related to a method for providing electrical energy to an aircraft for vertical take-off or landing (VTOL), comprising the steps:
- flying, in particular hovering, a VTOL aircraft over a pre-defined position;
- connecting the VTOL aircraft to a device according to one of the preceding claims;
- providing electrical energy to the VTOL aircraft.

The connection of the provision means to the VTOL aircraft can be performed during hovering or while the VTOL aircraft is on the ground or a heliport.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a first charging set up according to an embodiment of this disclosure.
Fig. 2 illustrates a second charging set up according to an embodiment of this disclosure.
Fig. 3 illustrates a third charging set up according to an embodiment of this disclosure.
Fig. 4 illustrates a fourth charging set up according to an embodiment of this disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

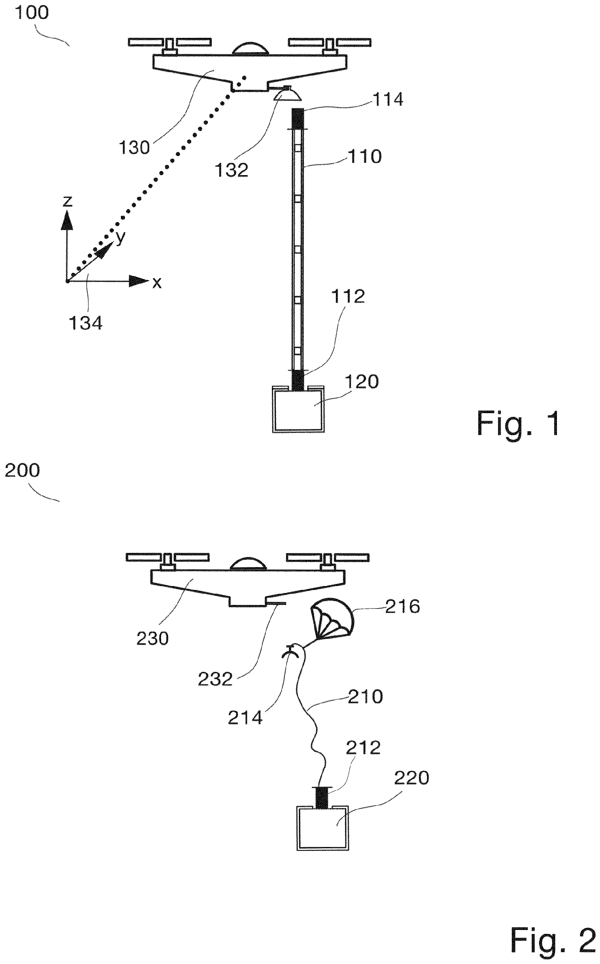

Fig. 1 illustrates a first charging set up 100 according to an embodiment of this disclosure. An all-electric VTOL aircraft 130 hovers over a pre-defined 3D charging position 134. The VTOL aircraft is depicted in a lateral view with two of its four propellers visible. The VTOL aircraft comprises a receiving end 132 for a charging means. The receiving end 132 is tapered such that an external charging means can be provided at slightly different charging positions 134 and can still find its way to connect with the receiving end.

The charging set up 100 further illustrates a provision means 110. The provision means is configured to provide electrical energy from a ground position vertically to a VTOL aircraft hovering at the 3D charging position 134. Therefore, the provision means is formed as a ladder by which two electrical conductor (e.g. one or more electrical phases and electrical ground) are provided the VTOL aircraft. The ladder is stiff and controllable in length such that in particular vertical variations of the charging position can be adjusted and/or different charging positions (e.g. for different VTOL aircraft types) can be served. The provision means 110 comprises a first interface 112 which is configured to electrically connect the provision means to an energy source 120. The energy source 120 can be an independent energy source, that provides electrical energy based e.g. on fossil, wind and/or solar energy. The energy source 120 can also be a grid connected to an electric power plant. The provision means 110 further comprises a second interface 114 by which it can connect to the receiving end 132 of a VTOL aircraft.

The provision means 110 can furthermore comprise an energy management system by which a charging can be controlled. Additionally or alternatively, the all-electric VTOL can be configured such that its motors receive the electric energy for hovering during the charging directly from the provision means 110. The concurrent charging and energy provision to the VTOL aircraft's motors can also be controlled by the energy management system comprised by the provision means. Of course, the energy management system can also be an independent component or located at the energy source. By this set-up a VTOL aircraft can be charged electrically without the need to land. This can save significant resources of the VTOL.

Fig. 2 illustrates a second charging set up 200 according to an embodiment of this disclosure. An all-electric VTOL aircraft 230 hovers over a pre-defined 3D charging position. The VTOL aircraft comprises a receiving end 232 for a charging means.

The charging set up 200 further illustrates a provision means 210. The provision means is configured to provide electrical energy from a ground position vertically to a VTOL aircraft hovering at a 3D charging position. The provision means comprises a first interface 212 configured to electrically connect the provision means to an energy source 220 and a second interface 214 configured to connect the provision means to the receiving end 232 of the VTOL aircraft 230.

The provision means 210 comprises a flexible cable with a variable length. This makes the provision means lightweight and flexible to provide electrical energy to different charging positions. In one implementation of the illustrated embodiment, the provision means needs to be attached to the VTOL aircraft while it is still on the ground. It provides electrical energy for the VTOL aircraft until it is in a pre-defined hovering starting position. In one implementation of the illustrated embodiment, the provision means is provided by an external drone to the VTOL aircraft while it is hovering. In a further implementation of the illustrated embodiment, the VTOL aircraft comprises the cable and is configured to reel the cable (i.e. the provision means 210) down to the ground from a hovering state.

The provision means comprises a parachute system 216. The parachute is configured to open when the provision means falls to the ground. This can be the case, e.g. if a failure occurred and the connection of the provision means to the VTOL aircraft must be released. This can also be the case, if the provision means is part of the ground station and is released after the VTOL 230 has reached its hovering starting position.

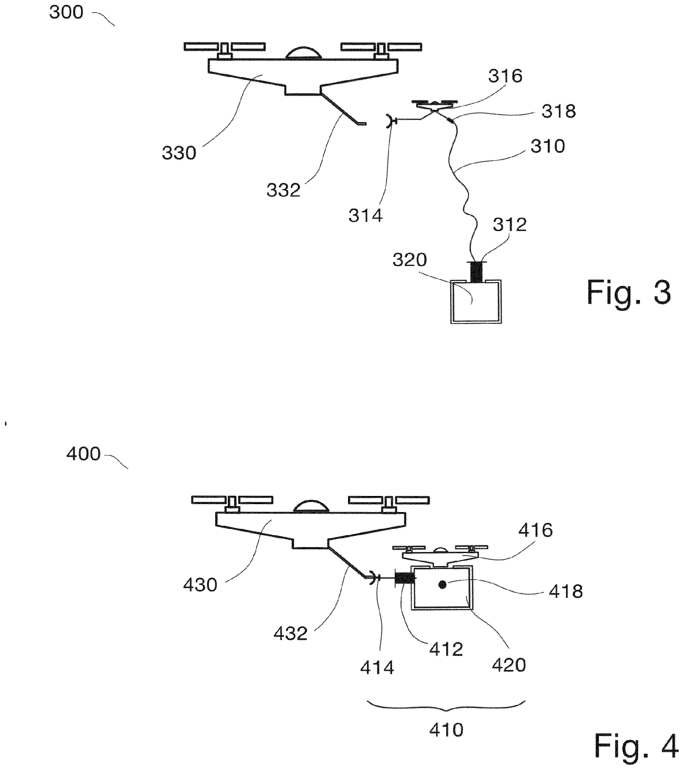

Fig. 3 illustrates a third charging set up 300 according to an embodiment of this disclosure. An all-electric VTOL aircraft 330 hovers over a pre-defined 3D charging position. The VTOL aircraft comprises a receiving end 332 for a charging means.

The charging set up 300 further illustrates a provision means 310. The provision means is configured to provide electrical energy from a ground position vertically to a VTOL aircraft hovering at a 3D charging position. The provision means comprises a first interface 312 configured to electrically connect the provision means to an energy source 320 and a second interface 314 configured to connect the provision means to the receiving end 332 of the VTOL aircraft 330.

The provision means 310 comprises a flexible cable with a variable length, similar to the embodiment illustrated in Fig. 2. The provision means further comprises an electrical lifter drone 316 that lifts the provision means to the VTOL aircraft and after charging brings the provision means to the ground. The lifter drone 316 serves as platform for the second interface 314. Furthermore, the lifter drone comprises a safety connection 318 configured to connect to the cable of the provision means 310. The lifter drone 316 lifts the provision means 310 to the hovering VTOL aircraft and connects the second interface 314 to its counterpart 332 at the VTOL aircraft. If during the connection, an emergency situation occurs, and the second interface 314 cannot be released from the VTOL aircraft, the lifter drone can release the safety connection 318 to disconnect from the ground. The second interface 314 and the safety connection 318 are arranged at the lifter drone such that the center of gravity remains in the center of the lifter drone 316.

Fig. 4 illustrates a fourth charging set up 400 according to an embodiment of this disclosure. An all-electric VTOL aircraft 430 is charged by an energy source 420 while flying horizontally and/or vertically. The VTOL aircraft comprises a receiving end 432 for a charging means.

The charging set up 400 illustrates a provision means 410 that comprises the energy source 420. The provision means comprises a first interface 412 configured to electrically connect the provision means to the energy source 420 and a second interface 414 configured to connect the provision means to the receiving end 432 of the VTOL aircraft 430. To charge the VTOL aircraft while it is flying, the provision means 410 comprises an energy service drone 416 that is configured to accompany the VTOL aircraft up to a certain speed. The energy source is attached to the energy service drone 416 such that the center of gravity 418 remains in the center of the compounded provision means.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: first charging set up
- 110: provision means
- 112: first interface
- 114: second interface
- 120: energy source
- 130: VTOL
- 132: counter part of second interface
- 134: charging position
- 200: second charging set up
- 210: provision means
- 212: first interface
- 214: second interface
- 216: parachute
- 220: energy source
- 230: VTOL
- 232: counter part of second interface
- 300: second charging set up
- 310: provision means
- 312: first interface
- 314: second interface
- 316: lifter drone
- 318: safety connection
- 320: energy source
- 330: VTOL
- 332: counter part of second interface
- 400: second charging set up
- 410: provision means
- 412: first interface
- 414: second interface
- 416: energy service drone
- 418: center of gravity
- 420: energy source
- 430: VTOL
- 432: counter part of second interface

## Claims

1. Device for providing electrical energy to an aircraft for vertical take-off or landing, VTOL,
comprising:
- a first interface (110) configured to be connected to an electrical energy source (120);
- a provision means (112) attached to the first interface and for providing electrical energy upwards and/or sidewards to the VTOL aircraft while the VTOL is airborne,
- a second interface (134) configured to be connected to the provision means and to a VTOL aircraft (130) and configured for providing electrical energy from the energy source (120) over the provision means (110) to the VTOL aircraft (130).

2. The device according to one of the preceding claims,
wherein the VTOL aircraft (130) comprises an electrical compulsion technology.

3. The device according to the preceding claim,
wherein the device comprises the electrical energy source (418), in particular an electrical battery.

4. The device according to one of the preceding claims,
wherein the electrical energy source (120) comprises a fuel-based electrical generator.

5. The device according to one of the preceding claims,
wherein the provision means (110) can comprise a flexible part and/or a stiff part.

6. The device according to one of the preceding claims,
wherein the provision means (110) can comprise one or more of:
- a cable;
- a cantilever;
- a rod;
- a ladder.

7. The device according to one of the preceding claims,
wherein the provision means (110) has a controllable length and/or height.

8. The device according to one of the preceding claims,
wherein the provision means (210) and/or the second interface (214) comprise a parachute system (216).

9. The device according to one of the preceding claims,
wherein the provision means (410) is configured to fly to the VTOL aircraft automatically.

10. The device according to one of the preceding claims,
wherein the provision means (310) is configured to actively fly away from the VTOL aircraft.

11. The device according to one of the preceding claims,
configured to provide electrical energy while the VTOL aircraft (430) flies laterally.

12. The device according to one of the preceding claims,
wherein the first interface (112), the provision means (110), and/or the second interface (114) are configured for contactless transmission of electrical energy.

13. The device according to one of the preceding claims,
wherein the second interface (114) is configured to be disconnected from the VTOL aircraft and/or the provision means (110) based on a force exerted by the VTOL aircraft on the second interface.

14. The device according to one of the preceding claims,
configured to transform wind and/or solar energy to electrical energy for provision to the VTOL aircraft (130).

15. A method for supplying a VTOL aircraft with electrical energy, comprising the steps:
- flying, in particular hovering, a VTOL aircraft (130) over a pre-defined position (134);
- connecting the VTOL aircraft to a device according to one of the preceding claims;
- providing electrical energy to the VTOL aircraft.
